# EUROPEAN PATENT APPLICATION

(11) **EP 4 797 092 A1**
(43) Date of publication of application: **26.08.2026**
(21) Application number: 26150293.4
(22) Date of filing: 05.01.2026
(51) Int. Cl.: G06F 9/451, G06F 8/60, G06F 9/445

(54) **REMOTE DEPLOYMENT METHOD AND SYSTEM FOR USER INTERFACES OF SOFTWARE PLATFORM**

(30) Priority: 21.02.2025 CN 202510194991; 23.05.2025 CN 202510676966
(71) Applicant: SHANGHAI TOSUN TECHNOLOGY LTD, Shanghai 201804 (CN)
(72) Inventor: Liu, Chu, Shanghai (CN); Xie, Yueyin, Shanghai (CN); Mo, Mang, Shanghai (CN)
(74) Representative: Sun, Yanan

(57) **Abstract**

A remote deployment method of user interfaces of a software platform, includes: creating a service process at a server side; performing, by the service process, real-time communication with a software platform process to obtain configuration files of the user interfaces of the software platform and runtime data of a software platform application; parsing the configuration files of the user interfaces of the software platform, and generating a webpage containing a corresponding user interface locally at the server side; after the webpage is opened in a local browser of the server side, obtaining an opening behavior to refresh, in real time, the runtime data of the software platform application on the webpage; and/or, in response to an operation on the user interface on the webpage, transmitting by the service process, in real time, an operation instruction to the software platform and further executing corresponding operation by the software platform.

## Description

### CROSS-REFERENCE TO THE RELATED APPLICATIONS

This application is based on and claims priority to Chinese Patent Application No. 202510194991.X, filed on February 21, 2025, and Chinese Patent Application No. 202510676966.5, filed on May 23, 2025, the entire contents of which are incorporated herein by reference.

### TECHNICAL FIELD

The present disclosure relates to software deployment technologies and in particular to a remote deployment method and system for user interfaces of software platform.

### BACKGROUND

The existing software platforms (e.g. Matrix Laboratory (MATLAB)) support the self-defined user interfaces designed by users thereon to realize user-specified functions. But, these functions are usually run on the software platform of the present equipment. If these functions are to be deployed on other equipment of the same architecture, it is required to install this software platform on each equipment and copy relevant programs and configuration files, which not only increases the deployment costs but also brings the risk of leakage of the intellectual property to the users. Furthermore, for the equipment of different architectures, due to compatibility limitation of the software platform, it is usually impossible to realize cross-platform deployment. In this case, the users need to re-design the functions, which further increases the design and deployment costs.

Taking MATLAB as example, the user can carry out model designing and perform simulation in the Simulink. But these functions can only be used on those computers installed with the MATLAB. If the software platform is to be run on ten computers, a large amount of time can be required to carry out MATLAB installation and model file copying. Furthermore, it is impossible for the software platform to run on the equipment with the operating systems of Harmony, Android and iOS and the like, which severely limits the application scope and flexibility of the software platform.

Therefore, the existing software platforms (e.g. MATLAB) have, in the deployment and cross-platform application, the technical problem that it is required to install the software platform on each equipment and copy relevant programs and configuration files when the software platform is to be deployed on other equipment of the same architecture.

It is to be understood that the information disclosed above in this background section is provided solely for the purpose of understanding the background of the present disclosure and shall not be construed as prior art.

### SUMMARY

The object of the present disclosure is to provide a remote deployment method and system for user interfaces of a software platform.

In order to solve the above technical problem, the present disclosure provides a remote deployment method of user interfaces of a software platform, including:
creating an independent service process at a server side, wherein the service process provides a HyperText Transfer Protocol (HTTP) service;
performing, by the service process, real-time communication with a software platform process to obtain configuration files of the user interfaces of the software platform and runtime data of a software platform application;
by the service process, parsing the configuration files of the user interfaces of the software platform, and based on information of each user interface in the configuration files, generating a webpage containing a corresponding user interface locally at the server side;
after the webpage is opened in a local browser of the server side, obtaining, by the service process, an opening behavior to refresh, in real time, the runtime data of the software platform application on the webpage; and/or, in response to an operation on the user interface on the webpage, transmitting by the service process, in real time, an operation instruction to the software platform and further executing corresponding operation by the software platform.

The remote deployment method of user interfaces of the software platform performs real-time communication between an independent service process and a software platform process, so as to obtain configuration files of the user interfaces of the software platform and runtime data of a software platform application. Meanwhile, the service process provides a HyperText Transfer Protocol (HTTP) service, thereby enabling the generation of a webpage containing the corresponding user interface locally at the server side. By operating the user interface on the webpage, the software platform responds and executes corresponding operations. This not only overcomes compatibility limitations of the software platform, but also facilitates deployment on other devices, significantly reducing design and deployment costs.

In a second aspect, the present disclosure provides a remote deployment system of user interfaces of a software platform, including a computer device, which is configured to include:
a software platform process;
a service process, configured to provide a HyperText Transfer Protocol (HTTP) service, and be applicable to performing real-time communication with the software platform process to obtain configuration files of the user interfaces of the software platform and runtime data of a software platform application, wherein the software platform is a third-party software platform;
wherein the service process is further applicable to parsing the configuration files of the user interfaces of the software platform and based on information of each user interface in the configuration files, generating a webpage containing a corresponding user interface locally at a server side; and,
after the webpage is opened in a local browser of the server side, the service process obtains an opening behavior to refresh, in real time, the runtime data of the software platform application on the webpage; and/or, in response to an operation on the user interface on the webpage, the service process transmits in real time an operation instruction to the software platform and further executes corresponding operation by the software platform.

In a third aspect, the present disclosure provides a non-transitory computer-readable storage medium, storing computer-device readable instructions, wherein the computer-device readable instructions are executed by at least one processor to perform the remote deployment method as described above.

In a fourth aspect, the present disclosure provides an electronic device, including at least one non-transitory computer-readable storage medium and at least one processor, wherein the non-transitory computer-readable storage medium stores executable instructions which are executed by the processor to cause the processor to perform the remote deployment method as described above.

In a fifth aspect, the present disclosure provides a computer program product, including programs or instructions, wherein the programs or instructions are executed on a computer to perform the remote deployment method as described above.

In a sixth aspect, the present disclosure provides a remote deployment method of user interfaces of a Matrix Laboratory (MATLAB) software platform, including:
creating an independent service process at a server side, wherein the service process provides a HyperText Transfer Protocol (HTTP) service;
performing, by the service process, real-time communication with an MATLAB software platform process to obtain configuration files of the user interfaces of the MATLAB software platform and runtime data of a software platform application;
by the service process, parsing the configuration files of the user interfaces of the MATLAB software platform, and based on information of each user interface in the configuration files, generating a webpage containing a corresponding user interface locally at the server side;
after the webpage is opened in a local browser of the server side, refreshing, by the service process in real time, the runtime data of an MATLAB software platform application on the webpage; and/or, in response to an operation of a user on the user interface on the webpage, transmitting by the service process, in real time, an operation instruction to the MATLAB software platform and further executing corresponding operation by the MATLAB software platform.

Additional features and advantages of the present disclosure will be described in the following specification, and some of these will become apparent from the specification or be understood through the practice of the present disclosure. The objectives and other advantages of the present disclosure are achieved and obtained through the structures specifically outlined in the specification and drawings.

To make the above objects, features, and advantages of the present disclosure clearer and more understandable, the present disclosure will be described in detail below with reference to the preferred embodiments and drawings.

### BRIEF DESCRIPTION OF THE DRAWINGS

In order to more clearly describe the technical solutions in the embodiments of the present disclosure or in the prior arts, the drawings required for descriptions of the specific embodiments or the prior arts will be briefly introduced. Apparently, the drawings described hereunder are only some embodiments of the present disclosure. Those skilled in the arts can obtain other drawings based on these drawings without making creative work.
FIG. 1 is a step diagram illustrating a remote deployment method of user interfaces of a software platform according to some embodiments of the present disclosure.
FIG. 2 is an interface schematic diagram of configuring a first independent service process by a software platform process in a case involved in some embodiments of the present disclosure.
FIG. 3 is a schematic diagram of a webpage effect generated after "localhost:9018" is entered in an address bar of a browser in a case involved in some embodiments of the present disclosure.
FIG. 4 is an interface schematic diagram of configuring a second independent service process by a software platform process in a case involved in some embodiments of the present disclosure.
FIG. 5 is a schematic diagram of a webpage effect generated after "localhost:9019" is entered in an address bar of a browser in a case involved in some embodiments of the present disclosure.
FIG. 6 is an interface schematic diagram of running two software platform processes on one computer at the same time in a case involved in some embodiments of the present disclosure.
FIG. 7 is a schematic diagram of a webpage effect generated after "localhost:9018" is entered in an address bar of a browser in another case involved in some embodiments of the present disclosure.
FIG. 8 is an interface schematic diagram of creating multiple users in a case involved in some embodiments of the present disclosure.
FIG. 9 is a schematic diagram of a webpage effect generated after "localhost:9018" is entered in an address bar of a browser and the user name "user" is entered in a login window in a case involved in some embodiments of the present disclosure.
FIG. 10 is a webpage schematic diagram after user login in a case involved in some embodiments of the present disclosure.
FIG. 11 is a schematic diagram of a webpage effect generated after "localhost:9018" is entered in an address bar of a browser and the user name "admin" is entered in a login window in a case involved in some embodiments of the present disclosure.
FIG. 12 is a webpage schematic diagram after admin user login in a case involved in some embodiments of the present disclosure.
FIG. 13 is a schematic diagram of some interactive controls involved in some embodiments of the present disclosure.
FIG. 14 is a schematic diagram of some display controls involved in some embodiments of the present disclosure.
FIG. 15 is a principle block diagram of a remote deployment system for user interfaces of a software platform in some embodiments of the present disclosure.
FIG. 16 is a principle block diagram of an electronic device involved in some embodiments of the present disclosure.
FIG. 17 is a principle block diagram of an electronic device involved in some embodiments of the present disclosure.

### DETAILED DESCRIPTION OF THE EMBODIMENTS

In order to make the object, technical solutions and advantages of the embodiments of the present disclosure clearer, the technical solutions of the present disclosure will be fully and clearly described in combination with drawings. Apparently, the embodiments described herein are only some embodiments rather than all embodiments. All other embodiments obtained by those skilled in the art based on these embodiments without making creative work shall fall within the scope of protection of the present disclosure.

The existing software platforms (e.g. MATLAB) support the self-defined user interfaces designed by users thereon to realize user-specified functions. But, these functions are usually run on the software platform of the present equipment. If these functions are to be deployed on other equipment of the same architecture, it is required to install this software platform on each equipment and copy relevant programs and configuration files, which not only increases the deployment costs but also brings the risk of leakage of the intellectual property to the users. Furthermore, for the equipment of different architectures, due to compatibility limitation of the software platform, it is usually impossible to realize cross-platform deployment. In this case, the users need to re-design the functions, which further increases the design and deployment costs.

Therefore, at least one embodiment provides a remote deployment method of user interfaces of a software platform, which includes:
creating an independent service process at a server side, where the service process provides a HyperText Transfer Protocol (HTTP) service;
performing, by the service process, real-time communication with a software platform process to obtain configuration files of the user interfaces of the software platform and runtime data of a software platform application; where the software platform is a third-party software platform;
by the service process, parsing the configuration files of the user interfaces of the software platform, and based on information of each user interface in the configuration files, generating a webpage containing a corresponding user interface locally at the server side;
after the webpage is opened in a local browser of the server side, obtaining, by the service process, the opening behavior to refresh, in real time, the runtime data of the software platform application on the webpage; and/or, in response to an operation on the user interface on the webpage, transmitting by the service process, in real time, an operation instruction to the software platform and further executing corresponding operation by the software platform.

In the remote deployment method of the user interfaces of the software platform, the created independent service process performs real-time communication with the software platform process so as to obtain the configuration files of the user interfaces of the software platform and the runtime data of the software platform application; further the service process provides the HTTP service, further generates a webpage containing a corresponding user interface locally at the server side, and by operation on the user interfaces on the webpage, enables the software platform to responsively execute corresponding operation, which not only overcomes the compatibility limitation of the software platform but also provides convenience for the deployment on other equipment, significantly lowering the design and deployment costs. In the remote deployment method of the user interfaces of the software platform, the functions of the local programs at the server side can be effectively exposed in the form of webpage to the remote users for use. The to-be-exposed functions can be deployed arbitrarily based on requirements. In this case, on the one hand, the development efficiency of the remote functions can be significantly increased, and on the other hand, the security of the local programs at the server side is guaranteed.

Various non-limiting implementations of the embodiments of the present disclosure will be detailed below in combination with drawings.

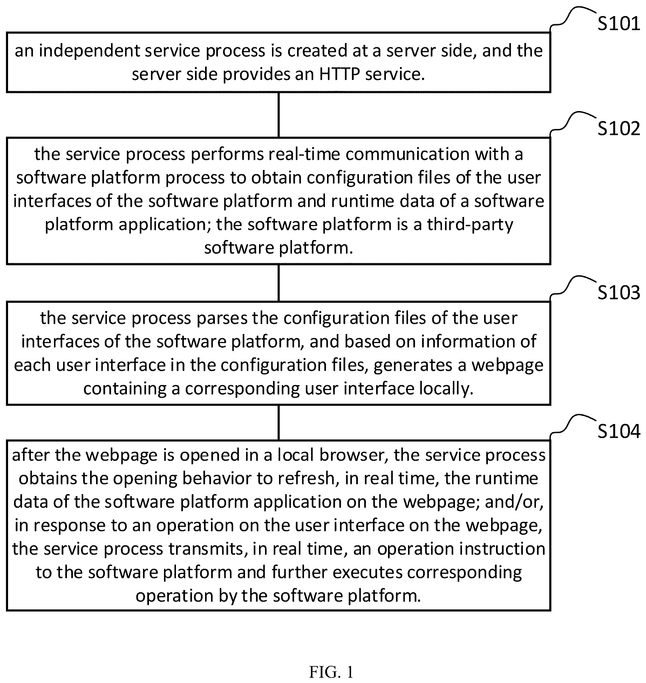

As shown in FIG.1, some embodiments of the present disclosure provide a remote deployment method of user interfaces of a software platform, which includes the following steps.

At step S101, an independent service process is created at a server side, and the server side provides an HTTP service.

At step S102, the service process performs real-time communication with a software platform process to obtain configuration files of the user interfaces of the software platform and runtime data of a software platform application; the software platform is a third-party software platform.

At step S103, the service process parses the configuration files of the user interfaces of the software platform, and based on information of each user interface in the configuration files, generates a webpage containing a corresponding user interface locally at the server side.

At step S104, after the webpage is opened in a local browser of the server side, the service process obtains the opening behavior to refresh, in real time, the runtime data of the software platform application on the webpage; and/or, in response to an operation on the user interface on the webpage, the service process transmits, in real time, an operation instruction to the software platform and further executes corresponding operation by the software platform.

Specifically, after the webpage is generated locally at the server side, the remote user can request the webpage and the webpage generated locally at the server side is transmitted to the remote user for displaying, thus facilitating remote viewing and development.

Specifically, the third-party software platform refers to a software platform supporting plugin system or secondary development, such as MATLAB, CANoe, TSMaster and so on.

Specifically, in the remote deployment method of the user interfaces of the software platform, one service process can be created to perform real-time communication with the software platform process, or multiple service processes can be created to perform real-time communication with the software platform process and then these service processes are configured by the software platform process.

In response to an operation of the user on the user interface on the webpage, the service process transmits, in real time, an operation instruction to the software platform and further executes corresponding operation by the software platform, which specifically includes the following process:
The user interfaces on the webpage can present controls for the users to operate, such as buttons, list boxes, text boxes and check boxes and the like. The users perform corresponding operations on the user interfaces on the webpage by mouse clicking (e.g. by clicking on the buttons) or by keyboard inputting (e.g. inputting text information in the highlighted text boxes).

The users perform operations such as clicking the buttons, inputting in the text boxes and the like on the user interfaces of the webpage. These operations can trigger corresponding JavaScript events and the JavaScript codes at the webpage end can capture these events and encapsulate information relating to the user operations (e.g. button names, and values input in the text boxes and the like) into a specific message format. This message includes operation type, relevant component identifier, and operation-related data and the like. The encapsulated message is sent to the service process at the server side based on a network protocol, for example, HTTP.

The service process can parse this message upon receiving it. Based on the component identifier and operation type in this message, corresponding relevant component and event processing procedures are found and triggered for execution.

The relevant event processing procedure extracts an operation instruction for the software platform based on the operation instruction carried in the message, and transmits the instruction to the software platform so as to finally perform corresponding operations by the software platform.

In the application scenario where multiple service processes perform real-time communication with one software platform, the remote deployment method of the user interfaces of the software platform is detailed below in combination with a case.

It is supposed that the CAN remaining bus simulation and calibration are run simultaneously on the software platform.

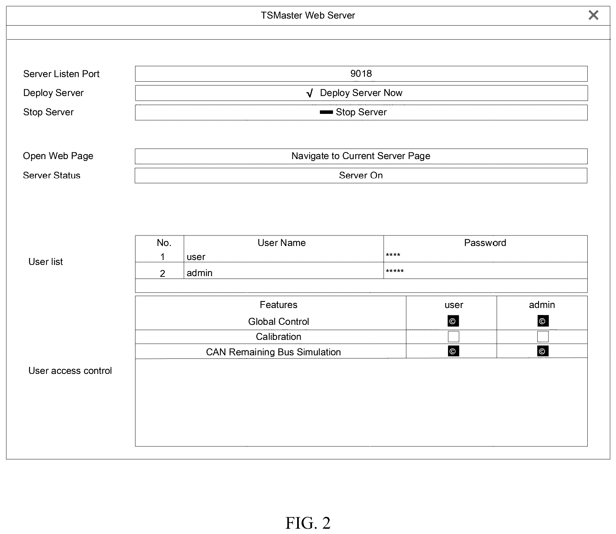

Firstly, as shown in FIG. 2, when the first independent service process is configured by the software platform process, the port number of the service process is filled as 9018 on the configuration interface of the software platform process, indicating the to-be-monitored port number is 9018 after the service process is started. Then, the functions "Global Control" and "CAN Remaining Bus Simulation" are ticked.

When the button "Deploy Server Now" is clicked in the software platform, the first service process will be started with the following command line: TSMasterServer.exe 9018 TSMaster
The "TSMasterServer.exe" is the name of the service process, and the command line carries two parameters in total. 9018 is the above port number; "TSMaster" is the global name of the software platform application. If a second software platform process is started, the global name of the software platform application is "TSMaster1"; if there is also a third software platform process, the global name of the software platform application is "TSMaster2" and so on.

The function names "Global Control" and "CAN Remaining Bus Simulation" are stored in the configuration files of the software platform for use by a filtering service process to present specific functions to users. Herein, it is indicated that this service process is only allowed to display the functions "Global Control" and the function "CAN Remaining Bus Simulation" to the users.

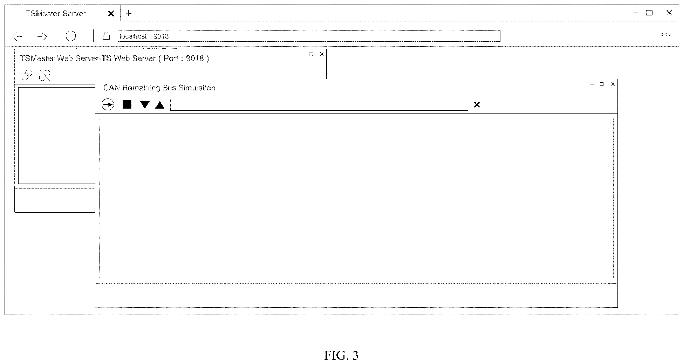

As shown in FIG. 3, after the first service process is started, "localhost:9018" is entered in the address bar of the browser so as to access the server side locally at the server side. At this time, after the webpage is opened, two windows can be seen: one window "TSMaster Web Server" corresponding to the function "Global Control" and the other window "CAN Remaining Bus Simulation" corresponding to the function "CAN Remaining Bus Simulation".

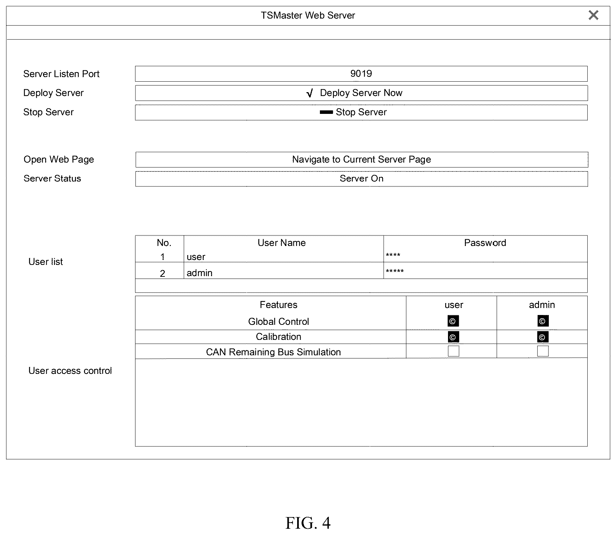

As shown in FIG. 4, then in the software platform, the second independent service process is configured by the software platform process with the monitored port of the service process configured as 9019. The functions "Global Control" and "Calibration" are ticked.

In the software platform, the button "Deploy Server Now" is clicked again to start the server side with the following command line: TSMasterServer.exe 9019 TSMaster

"TSMasterServer.exe" is the name of the service process, and the command line carries two parameters in total. 9019 is the above port number; and "TSMaster" is the global name of the software platform application.

The function names "Global Control" and "Calibration" are stored in the configuration files of the software platform for use by a filtering service process to present specific functions to users. Herein, it is indicated that this service process is only allowed to display the functions "Global Control" and the function "Calibration" to the users.

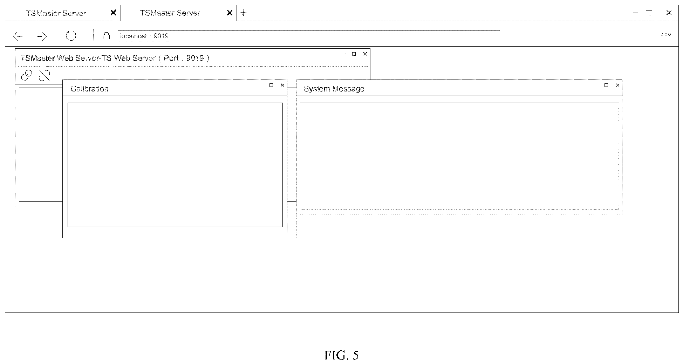

As shown in FIG. 5, after the second service process is started, "localhost:9019" is entered in the address bar of the browser so as to access the server side locally at the server side. At this time, after the webpage is opened, two windows can be seen: one window "TSMaster Web Server" corresponding to the function "Global Control" and the other window "Calibration" corresponding to the function "Calibration".

The application scenario where one software platform process performs real-time communication with multiple service processes is, for example, but not limited to application to logical function or permission function grouping.

For example, when one software platform process creates multiple calibration servers (engine calibration, chassis calibration and the like), multiple diagnosis servers, simulation servers, data monitoring servers and the like, different server functions can be provided by different service processes.

For example, when one software platform creates an ordinary user server and an administrator server, the users accessing the servers can be physically isolated by two different service processes, ensuring the security.

It should be noted that in the application scenario where one service process performs real-time communication with one software platform process, the remote deployment method of the user interfaces of the software platform can be referred to the remote deployment method of the user interfaces of the software platform in the application scenario where multiple service processes perform real-time communication with one software platform, and no redundant descriptions are made herein.

In some embodiments, the service process performs real-time communication with at least one software platform process.

The service process parses the configuration files of the user interfaces of the each software platform respectively, and based on information of each user interface in each configuration file, generates a webpage containing all interfaces locally at the server side.

Specifically, the application scenario where multiple software platform processes perform real-time communication with one service process is, for example, but limited to application to data fusion and unified display function: for example, in one unified webpage, the users can simultaneously control the functions of multiple software platforms, for example, the 32-bit software platform process is in charge of simulation and the 64-bit software platform process is in charge of data collection and the like.

The method in which the service process performs real-time communication with at least one software platform process will be detailed below by way of case.

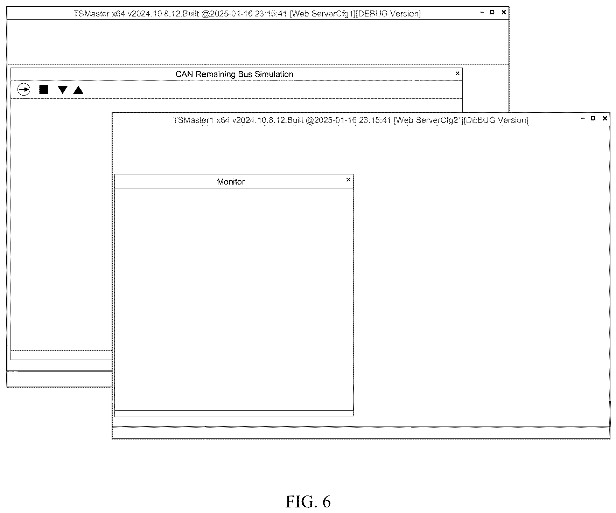

As shown in FIG. 6, it is an interface of two software platform processes run on one computer at the same time. The global names of the software platform applications are TSMaster and TSMaster1 respectively. In the software platform process TSMaster, the CAN remaining bus simulation task is run with its window name "CAN Remaining Bus Simulation"; in the software platform process TSMaster1, the signal monitoring task is run with its window name "Monitor".

The configuration file TSMaster.ini of the software platform process can be stored in the folder "CANRBS" and the folder "CANMon" respectively based on different engineering. In the file TSMaster.ini in the folder "CANRBS", the configuration information of the window "CAN Remaining Bus Simulation" is stored, whereas in the file TSMaster.ini in the folder "CANMon", the configuration information of the window "Monitor" is stored.

With the file TSMaster.ini in the folder "CANRBS" as example, the interface of the configuration information of its window "CAN Remaining Bus Simulation" has the following relevant parts:
[TfrmCANRBS]
Caption = CAN Remaining Bus Simulation
XPosition = 100
YPosition = 200
Width = 800
Height = 600

where TfrmCANRBS refers to the class name of the window "CAN Remaining Bus Simulation"; Caption is the window title; XPosition and YPosition are the upper-left corner coordinates of the window; and Width and Height are width and height of the window.

Based on the parsing result of the configuration information of the above interface, the service process generates one html local webpage of the server side, creates a corresponding webpage form, and sets corresponding configuration information, with webpage source codes and interface configuration-related parts shown below:

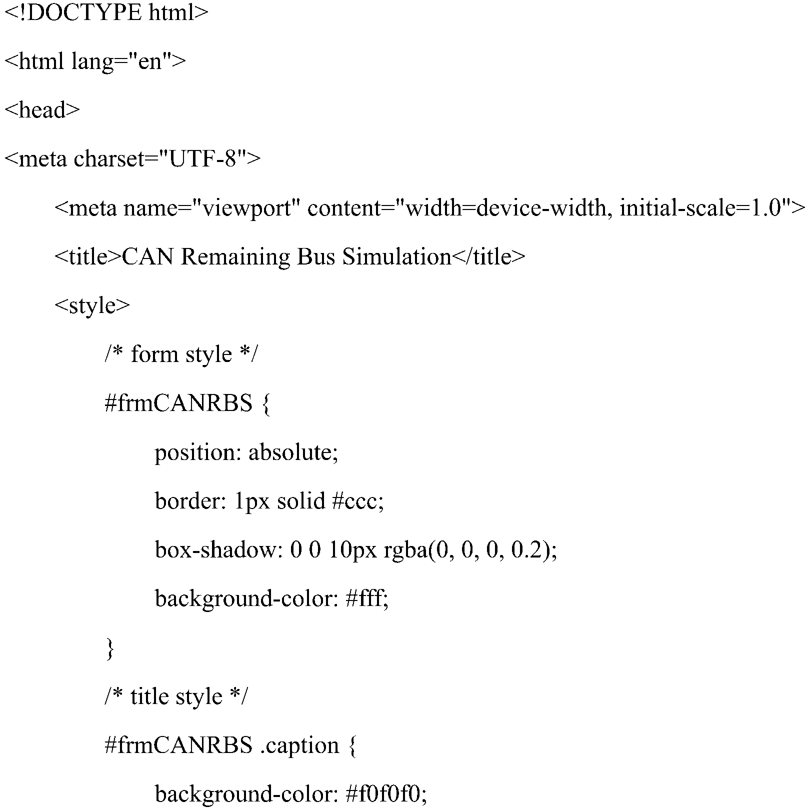

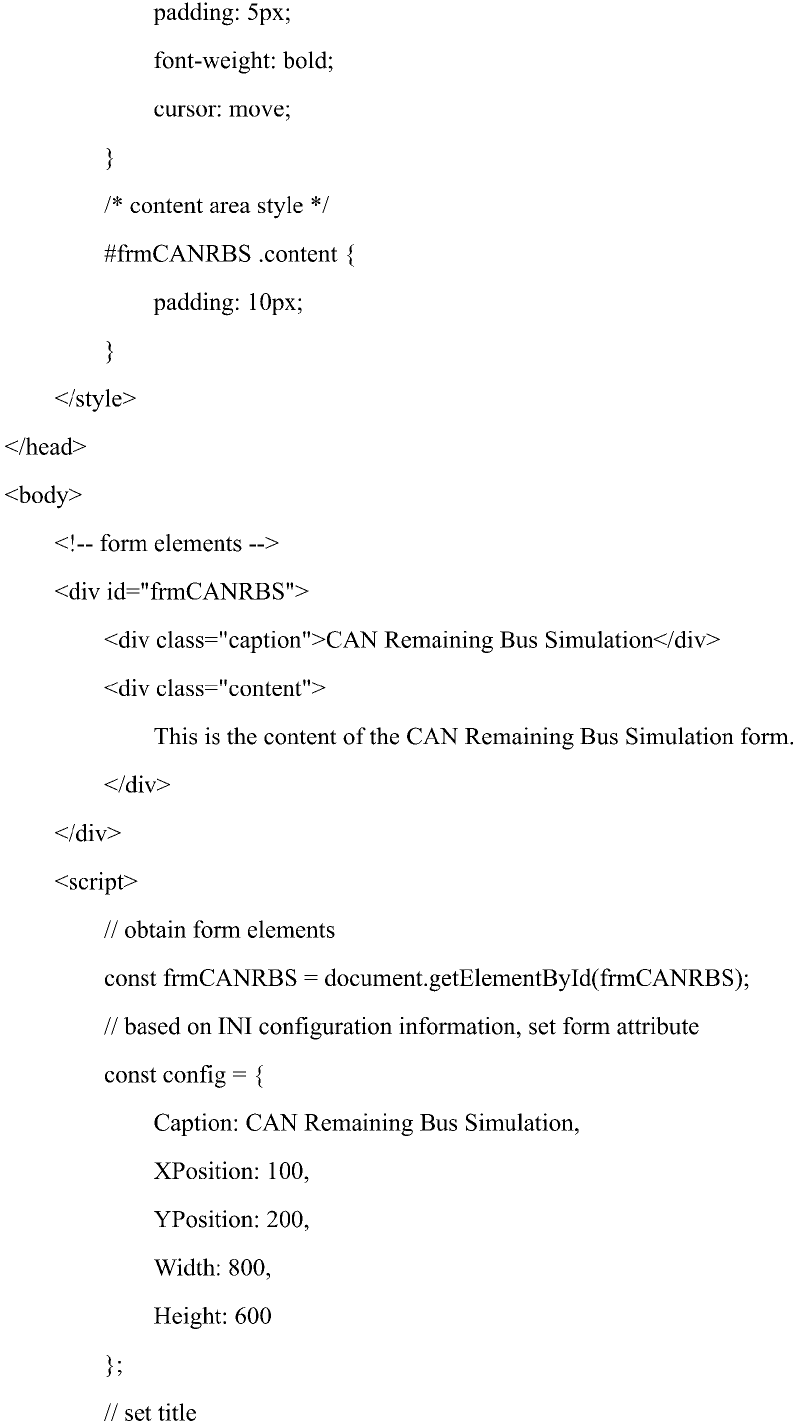

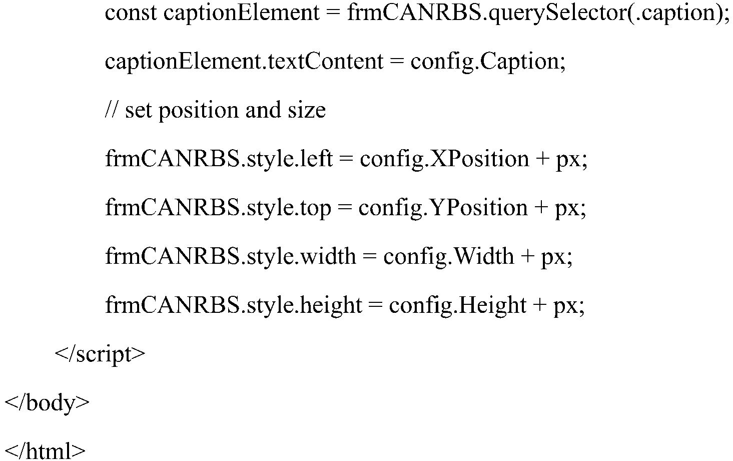

With the following command line, the service process TSMasterServer.exe is started: TSMasterServer.exe 9018 "TSMaster,TSMaster1"

"TSMasterServer.exe" is the name of the service process, and the command line carries three parameters. 9018 is the above port number; "TSMaster,TSMaster1" is the global names of the software platform application separated by comma. Herein it is indicated that the service process performs real-time communication with the software platform process TSMaster and the software platform process TSMaster1 at the same time.

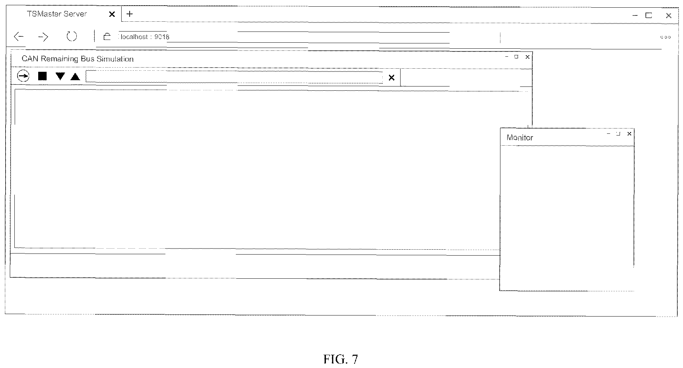

As shown in FIG. 7, after the service process is started based on the above command line, "localhost:9018" is entered in the address bar of the browser so as to access the server side locally at the server side. At this time, after the webpage is opened, two pages can be seen: one window "CAN Remaining Bus Simulation" corresponding to the CAN Remaining Bus Simulation function of the software platform process TSMaster and the other window "Monitor" corresponding to the monitoring function of the software platform process TSMaster1.

In some embodiments, when the webpage is opened in the local browser of the server side, the service process creates a session module and based on a login permission level configured for the session module, provides corresponding interaction and access permissions of the webpage, which includes: creating users in the session module; for each user, setting an interaction permission including a window visibility permission and a window invisibility permission; and, for each user with the window visibility permission, setting an access permission including: an only-display permission and a full control permission.

Specifically, in each window, an interaction permission can be set for each user, and the interaction permission, for example, includes "window visibility" and "window invisibility". In this case, different users can see different numbers of windows when opening the webpage.

Specifically, the users divide the access permissions of the windows with permissions into "only display" and "full control". For the permission of "only display", the users can only view data by interface control and cannot transmit key operation commands into the software platform process. For example, the users of "only display" can only view simulation process but cannot start and stop simulation. For the permission of "full control", the users can execute all functions of the window, such as starting and stopping simulation and browsing simulation data and the like.

Specifically, by setting the login permission level, specific data can be displayed to specific users, avoiding unauthorized access for sensitive data.

The method in which, when the webpage is opened on the local browser of the server side, the service process creates the session module and based on the login permission level configured for the session module, provides corresponding interaction and access permissions of the webpage will be detailed below by way of case.

In the software platform, the CAN remaining bus simulation and calibration are run simultaneously. By the software platform process, the independent service process is configured. The port number filled with 9018 indicates that the to-be-monitored port number is 9018 after the service process is started. In the user permission column of the software platform, the option "the user needs to log in with specific user name and password" is ticked to activate a permission level control function.

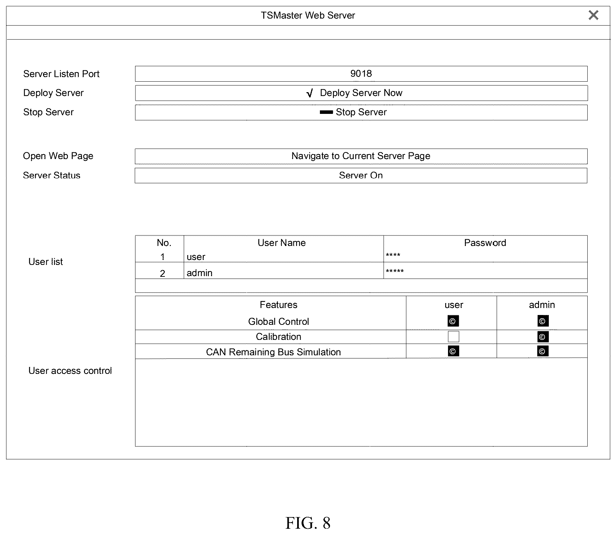

In the user list, multiple users can be created and a user name and a password can also be set for each user. For example, in this case, a total of two users are created, where the user names are user and admin and their passwords are "user" and "admin" as shown in FIG. 8.

After the user list is edited, the lowest user permission control list can be reconstructed and show a function column and a user column. In this case, the function column includes three functions: "Global Control", "Calibration" and "CAN Remaining Bus Simulation"; in the corresponding user column, the "Global Control" and "CAN Remaining Bus Simulation" are ticked to indicate allowing the user with the user name "user" to access the "Global Control" and "CAN Remaining Bus Simulation" functions but not allowing the user to access the "Calibration" function. In the corresponding admin column, all functions are ticked, which indicates allowing the user with the user name "admin" to access all functions.

In the software platform, when the button "Deploy Server Now" is clicked, the service process is started with the following command line: TSMasterServer.exe 9018 TSMaster
where "TSMasterServer.exe" is the name of the service process, and the command line carries two parameters in total; 9018 is the above port number; and "TSMaster" is the global name of the software platform application.

In the configuration files of the software platform, the function names "Global Control", "Calibration" and "CAN Remaining Bus Simulation" are respectively stored based on the user permission so that the filtering service process can display specific functions to the users.

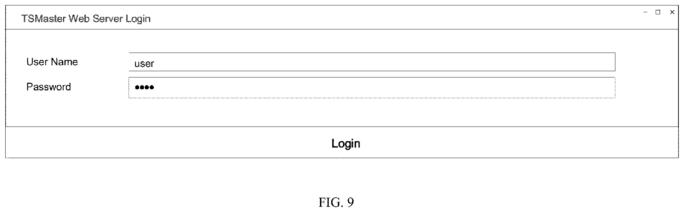

As shown in FIG. 9, "localhost:9018" is entered in the address bar of the browser so as to access the server side locally at the server side. At this time, after the webpage is opened, since the user permission control is enabled, the login window can be seen. If the user name "user" and the password "user" are entered, the login can be done with the user.

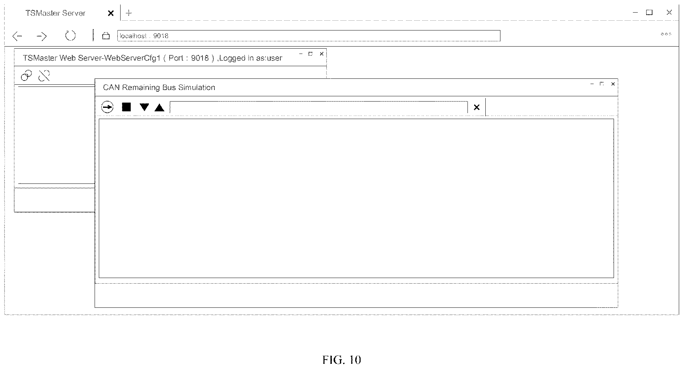

As shown in FIG. 10, after the user logs in, the user will see the two windows "TSMaster Web Server" and "CAN Remaining Bus Simulation" but cannot see the window "Calibration".

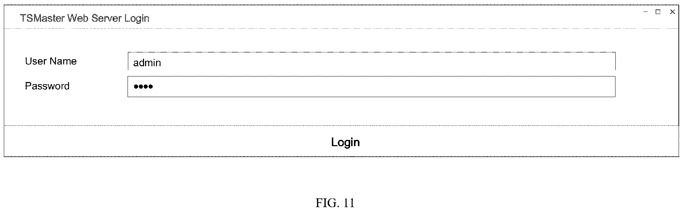

As shown in FIG. 11, at this time, one window will be created in the browser and "localhost:9018"is entered in the address bar to open a new webpage. When the user name "admin" and the password "admin" are entered in the login window, login can be done with the admin user.

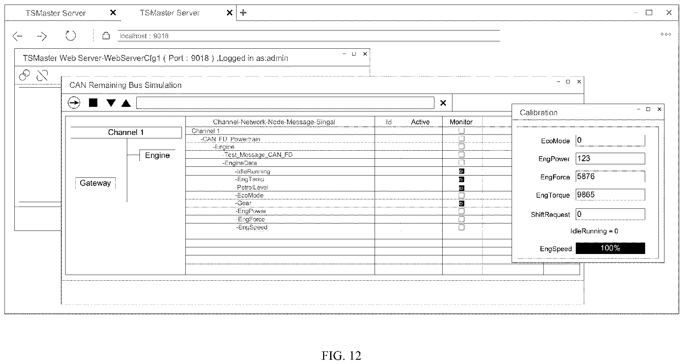

As shown in FIG. 12, after logging in, the admin user will see three windows: "TSMaster Web Server", "CAN Remaining Bus Simulation" and "Calibration".

In some embodiments, the user interfaces include at least one interactive control; and, after the webpage is opened in the local browser of the server side, the service process is applicable to responding to an operation of the users on the interactive control on the webpage.

The interactive control includes, for example, but not limited to: text box, password box, radio button, check box, button, drop-down box, text field, slider, input box (digit, date and the like), editable table cell, file upload control, switching button, date selector, time selector, color selector, numeric input box, rating control, toggle control, tree selection control and rich text editor and the like.

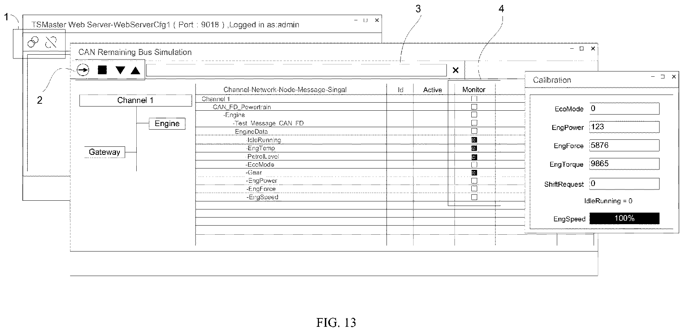

Specifically, as shown in FIG. 13, it shows connected and disconnected button 1, filtering text box 3, monitoring check box 4 and tool bar button 2 and the like.

In some embodiments, the user interfaces include at least one display control.

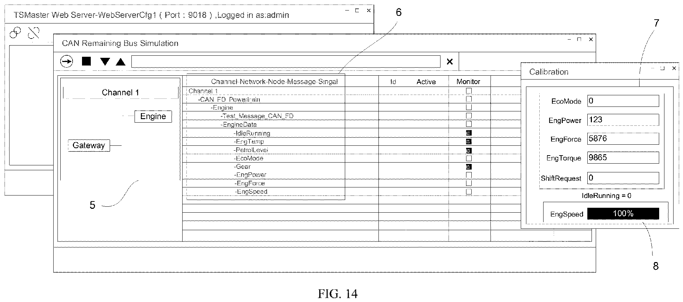

Specifically, as shown in FIG. 14, the display control includes, for example, includes but not limited to: label box 7 displaying signal name, progress bar 8 displaying signal value range, and drawing box 5 displaying node name 6 and color and the like.

In some embodiments, the service process performs real-time communication with the software platform process based on, for example, but not limited to, one or more of pipeline communication, shared memory communication, socket communication and message queue communication.

Specifically, the pipeline communication method includes the followings:
pipeline creation: one pipeline is created by a specific system invoking, with one end used for reading (reading end) and the other end used for writing (writing end); process association: each process for communication is associated with the reading end and the writing end of the pipeline; data writing: the data sending process writes data into the writing end of the pipe line; data reading: the data receiving process reads data from the reading end of the pipeline; pipeline closing: when the communication is ended, the relevant process closes the reading end and writing end of the pipeline to release resources.

Specifically, the shared memory communication method includes the followings:
shared memory creation: one shared memory area is created by one process using system invoking; shared memory mapping: each process to access the shared memory maps the shared memory to its own address space by system invoking; data interaction: using synchronization mechanism such as semaphore and mutex etc., the accesses of multiple processes for the shared memory are coordinated; un-mapping: when the process no longer needs to access the shared memory, the shared memory is unmapped from its own address space by system invoking; shared memory deletion: when all processes complete access for the shared memory, the shared memory is deleted to release system resources.

Specifically, the socket communication method includes the followings:
socket communication server side:
socket creation: address and port are bound using TCP or UDP; for TCP, it is needed to monitor connection and accept connection; data interaction is performed; socket is closed.
socket communication client:
socket creation: TCP or UDP is used; for TCP, it is needed to connect with a server; data interaction is performed; the socket is closed.

Specifically, the message queue communication method includes the followings: message queue creation: it is used for storing a message; message sending: the message usually includes a message type and a specific message content; message receiving: the message is selectively received based on message type or received based on the principle of first in and first out; message processing: an operation relating with the message content is performed; message queue closing: when the communication is ended, the relevant process closes the message queue to release resources.

It should be noted that the specific implementation of the above communication methods can be referred to the prior arts and no improvement is made to the above communication methods themselves in the embodiments.

In conclusion, this embodiment is particularly applicable to vehicle development field. The configuration files of the user interfaces of the software platform are parsed by the server side to avoid the traditional remote exclusive mode of intercepting the interactive interfaces. Furthermore, possession of the configuration information means the server side can build data models which are allocated to different users for simultaneous use, that is, one server side serves multiple users at the same time. These users can use different server side data (the server side possesses a huge amount of databases, signals, measurement information, diagnosis and calibration information etc.). In this embodiment, the specific session module can access multiple users simultaneously and each user can fully operate the complete instance of the server side and carry out real-time interaction, so as to realize data management and remote interaction with permission restriction in the vehicle development process.

Some embodiments further provide a remote deployment method of user interfaces of a Matrix Laboratory (MATLAB) software platform, which includes: creating an independent service process at a server side, where the service process provides a HyperText Transfer Protocol (HTTP) service; performing, by the service process, real-time communication with an MATLAB software platform process to obtain configuration files of the user interfaces of the MATLAB software platform and runtime data of a software platform application; by the service process, parsing the configuration files of the user interfaces of the MATLAB software platform, and based on information of each user interface in the configuration files, generating a webpage containing a corresponding user interface locally at the server side; after the webpage is opened in a local browser of the server side, refreshing, by the service process in real time, the runtime data of an MATLAB software platform application on the webpage; and/or, in response to an operation of a user on the user interface on the webpage, transmitting by the service process, in real time, an operation instruction to the MATLAB software platform and further executing corresponding operation by the MATLAB software platform.

For the MATLAB software platform, the remote deployment method provided by some embodiments includes the followings: the service process performs real-time communication with at least one MATLAB software platform process; the service process respectively parses the configuration files of the user interfaces of the MATLAB software platform, and based on information of each user interface in corresponding configuration files, generates a webpage containing all interfaces locally at the server side; and, after the webpage is opened in a local browser of the server side, the service process creates a session module, and based on a login permission level configured for the session module, provides corresponding interaction and access permissions of the webpage, which includes: creating users in the session module; for each user, setting an interaction permission including a window visibility permission and a window invisibility permission; and, for each user with the window visibility permission, setting an access permission including: an only-display permission and a full control permission.

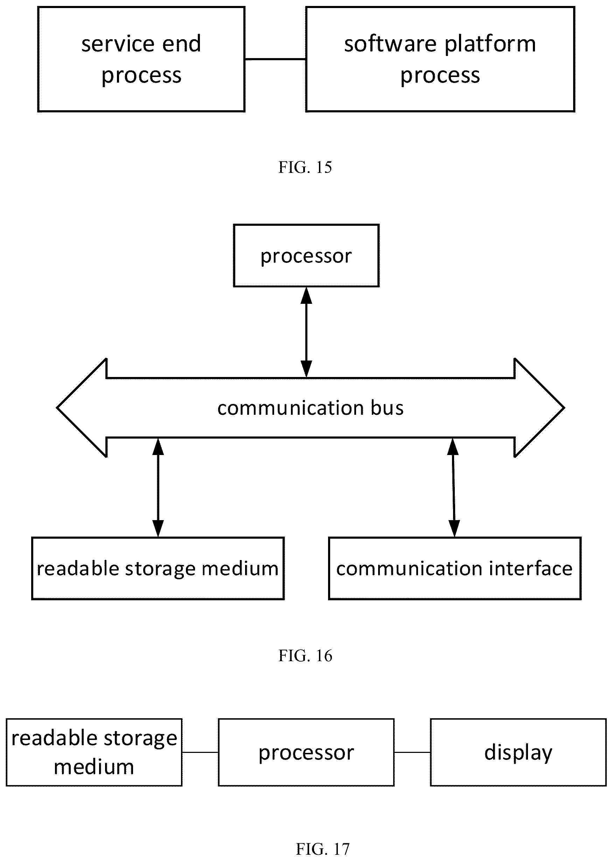

As shown in FIG. 15, some embodiments further provide a remote deployment system for user interfaces of a software platform, which includes a computer device which is configured to include:
a software platform process;
a service process, configured to provide a HyperText Transfer Protocol (HTTP) service, and be applicable to performing real-time communication with the software platform process to obtain configuration files of the user interfaces of the software platform and runtime data of a software platform application, where the software platform is a third-party software platform;
where the service process is further applicable to parsing the configuration files of the user interfaces of the software platform and based on information of each user interface in the configuration files, generating a webpage containing a corresponding user interface locally at a server side; and
after the webpage is opened in a local browser of the server side, the service process obtains the opening behavior to refresh, in real time, the runtime data of the software platform application on the webpage; and/or, in response to an operation on the user interface on the webpage, the service process transmits in real time an operation instruction to the software platform and further executes corresponding operation by the software platform.

The specific implementation function of the software platform process and the service process are implemented in the computer device by referring to the contents of the above remote deployment method of the user interfaces of the software platform and no redundant descriptions are made herein.

An electronic device in the embodiments of the present disclosure will be described below from the hardware processing.

In the embodiments of the present disclosure, no limitation is made to the specific implementation of the electronic device.

As shown in FIG. 16, some embodiments further provide an electronic device which includes a non-transitory computer-readable storage medium, a communication bus and a communication interface; where communication is performed by the communication bus among the processor, the non-transitory computer-readable storage medium and the communication interface; the non-transitory computer-readable storage medium is configured to store programs for performing the remote deployment method of the user interfaces of the software platform, where the programs cause the processor to perform the operations corresponding to the remote deployment method.

As shown in FIG. 17, some embodiments further provide an electronic device, including:
a processor, a display for communicating with the processor to display a webpage, and a non-transitory computer-readable storage medium, where,
the non-transitory computer-readable storage medium is configured to store instruction programs;
the processor is configured to execute the instruction programs to perform the following operations:
creating an independent service process at a server side, where the service process provides a HyperText Transfer Protocol (HTTP) service;
performing, by the service process, real-time communication with a software platform process to obtain configuration files of user interfaces of a software platform and runtime data of a software platform application, where the software platform is a third-party software platform; by the service process, parsing the configuration files of the user interfaces of the software platform, and based on information of each user interface in the configuration files, generating a webpage containing a corresponding user interface locally at the server side; after the webpage is opened in a local browser of the server side, obtaining, by the service process, the opening behavior to refresh, in real time, the runtime data of the software platform application on the webpage; and/or, in response to an operation on the user interface on the webpage, transmitting by the service process, in real time, an operation instruction to the software platform and further executing corresponding operation by the software platform; the display is configured to display the webpage containing a corresponding user interface.

In some embodiments, a computer device (e.g., an industrial personal computer (IPC)) may be one type of electronic device and may serve as a server.

FIGS. 16 and 17 show a schematic structural view of an electronic device, provided for illustration only and not intended to limit the electronic device. The electronic device may include fewer or more components than those shown, may combine components, or may employ different component arrangements.

In some embodiments, the communication interface may include physical interfaces such as RS-232, RS-485, and USB (including Type-C) for connecting external devices or bus adapters. The communication interface may further include wired network interfaces such as Ethernet and/or wireless network interfaces such as Wi-Fi and Bluetooth, for establishing communication links between the computer device and other electronic devices.

In some embodiments, examples of the non-transitory computer-readable storage medium include, without limitation, flash memory, hard disk drives, magnetic memory, magnetic disks, optical disks, and card-type memory (e.g., MultiMediaCard (MMC), Secure Digital (SD) memory, etc.). In certain embodiments, the storage medium may be an internal storage unit of the computer device, such as a built-in hard disk drive; in other embodiments, it may be an external storage device, such as a pluggable hard disk drive, a SmartMedia card (SMC), an SD card, or a flash memory card. Furthermore, the storage medium may include both an internal storage unit and an external storage device at the same time. The storage medium may be used to store application software installed on the computer device and various data (e.g., computer program code), and to temporarily store data that have been or are to be output.

In some embodiments, the processor may be a central processing unit (CPU), a controller, a microcontroller, a microprocessor, or another data-processing chip, and is configured to execute program code stored in the storage medium and/or to process data (e.g., to execute a computer program).

In some embodiments, the communication bus may be an input/output (I/O) bus, such as a Peripheral Component Interconnect (PCI) bus or an Extended Industry Standard Architecture (EISA) bus. The bus may be divided into an address bus, a data bus, and a control bus.

Optionally, the computer device further includes a user interface. The user interface may include a display, an input unit (e.g., a keyboard), and standard wired and/or wireless interfaces. Optionally, the display (or display module) may be a light-emitting diode (LED) display, a liquid crystal display (LCD), a touchscreen LCD, or an organic light-emitting diode (OLED) display. The display (or display module), also referred to as a display screen or display unit, is used to present information processed by the computer device and to provide a visual user interface.

The processor executes the programs to perform the steps in the embodiments of the remote deployment method of the user interfaces of the software platform shown in FIG. 1. Alternatively, the processor executes the computer programs to implement the functions of each module or unit in each apparatus embodiment.

Some embodiments further provide a non-transitory computer-readable storage medium, storing computer-readable instructions, where the computer-readable instructions are executed by at least one processor to perform the remote deployment method. This remote deployment method includes:
creating an independent service process at a server side, where the service process provides a HyperText Transfer Protocol (HTTP) service;
performing, by the service process, real-time communication with a software platform process to obtain configuration files of user interfaces of a software platform and runtime data of a software platform application; where the software platform is a third-party software platform;
by the service process, parsing the configuration files of the user interfaces of the software platform, and based on information of each user interface in the configuration files, generating a webpage containing a corresponding user interface locally at the server side;
after the webpage is opened in a local browser of the server side, obtaining, by the service process, the opening behavior to refresh, in real time, the runtime data of the software platform application on the webpage; and/or, in response to an operation on the user interface on the webpage, transmitting by the service process, in real time, an operation instruction to the software platform and further executing corresponding operation by the software platform.

Some embodiments further provide a non-transitory computer-readable storage medium, storing computer-readable instructions, where the computer-readable instructions are executed by at least one processor to perform the above remote deployment method. This remote deployment method includes:
creating an independent service process at a server side, where the service process provides a HyperText Transfer Protocol (HTTP) service;
performing, by the service process, real-time communication with a software platform process to obtain configuration files of user interfaces of a software platform and runtime data of a software platform application; where the software platform is a third-party software platform;
by the service process, parsing the configuration files of the user interfaces of the software platform, and based on information of each user interface in the configuration files, generating a webpage containing a corresponding user interface locally at the server side;
after the webpage is opened in a local browser of the server side, obtaining, by the service process, the opening behavior to refresh, in real time, the runtime data of the software platform application on the webpage; and/or, in response to an operation on the user interface on the webpage, transmitting by the service process, in real time, an operation instruction to the software platform and further executing corresponding operation by the software platform.

Reference can be made to the detailed descriptions of the remote deployment method and no redundant descriptions are made herein.

Some embodiments further provide a computer program product, including programs or instructions, where the programs or instructions are executed on a computer to perform the remote deployment method; the remote deployment method includes:
creating an independent service process at a server side, where the service process provides a HyperText Transfer Protocol (HTTP) service;
performing, by the service process, real-time communication with a software platform process to obtain configuration files of user interfaces of a software platform and runtime data of a software platform application; where the software platform is a third-party software platform;
by the service process, parsing the configuration files of the user interfaces of the software platform, and based on information of each user interface in the configuration files, generating a webpage containing a corresponding user interface locally at the server side;
after the webpage is opened in a local browser of the server side, obtaining, by the service process, the opening behavior to refresh, in real time, the runtime data of the software platform application on the webpage; and/or, in response to an operation on the user interface on the webpage, transmitting by the service process, in real time, an operation instruction to the software platform and further executing corresponding operation by the software platform.

Some embodiments further provide a computer program product, including a non-transitory computer-readable storage medium storing readable program codes thereon, where the readable program codes include instructions which cause at least one processor (one or more computer devices) to perform the operations of:
creating an independent service process at a server side, where the service process provides a HyperText Transfer Protocol (HTTP) service;
performing, by the service process, real-time communication with a software platform process to obtain configuration files of user interfaces of a software platform and runtime data of a software platform application; where the software platform is a third-party software platform;
by the service process, parsing the configuration files of the user interfaces of the software platform, and based on information of each user interface in the configuration files, generating a webpage containing a corresponding user interface locally at the server side;
after the webpage is opened in a local browser of the server side, obtaining, by the service process, the opening behavior to refresh, in real time, the runtime data of the software platform application on the webpage; and/or, in response to an operation on the user interface on the webpage, transmitting by the service process, in real time, an operation instruction to the software platform and further executing corresponding operation by the software platform.

It should be understood that, in several embodiments provided in the present disclosure, the disclosed apparatuses and methods may also be implemented in other ways. The foregoing apparatus embodiments are merely illustrative. For example, the flowcharts and block diagrams in the drawings depict possible system architectures, functions, and operations for apparatuses, methods, and computer program products according to multiple embodiments of the present disclosure. In this regard, each block in the flowcharts or block diagrams may represent a module, a program segment, or a portion of code including one or more executable instructions for implementing specified logical functions. It should also be noted that, in some alternative implementations, the functions indicated in the blocks may occur in an order different from that shown in the drawings. For instance, two consecutive blocks may be executed substantially concurrently and, at times, in the reverse order, depending on the functions involved. Furthermore, it should be noted that each block in the block diagrams and/or flowcharts, as well as combinations of blocks in the block diagrams and/or flowcharts, may be implemented by a special-purpose hardware-based system configured to perform the specified functions or acts, or by a combination of special-purpose hardware and computer instructions.

Additionally, in the embodiments of the present disclosure, the organization of the functional modules may be selected flexibly: all modules may be integrated into a single standalone unit, the modules may exist independently of one another, or at least two modules may be integrated to form a standalone unit.

When the foregoing function is implemented as a software functional module and is sold or used as a standalone product, it may be stored on a non-transitory computer-readable storage medium. In view of this, the overall technical solution of the present disclosure, as well as portions thereof that constitute improvements over the prior art, can be embodied as a software product. The software product is stored on the above storage medium and includes instructions which, when executed, cause a computer device (e.g., a personal computer, a server, or a network device) to perform some or all of the steps of the methods described in the embodiments of the present disclosure.

Based on the foregoing description of the preferred embodiments of the present disclosure, various changes and modifications may be made by those skilled in the art without departing from the technical spirit of the present disclosure. The technical scope of the present disclosure is not limited by the specification and should be determined by the scope of the claims.

## Claims

1. A remote deployment method of user interfaces of a software platform, comprising:
creating an independent service process at a server side, wherein the service process provides a HyperText Transfer Protocol (HTTP) service;
performing, by the service process, real-time communication with a software platform process to obtain configuration files of the user interfaces of the software platform and runtime data of a software platform application;
by the service process, parsing the configuration files of the user interfaces of the software platform, and based on information of each user interface in the configuration files, generating a webpage containing a corresponding user interface locally at the server side; and
after the webpage is opened in a local browser of the server side, obtaining, by the service process, an opening behavior to refresh, in real time, the runtime data of the software platform application on the webpage; and/or, in response to an operation on the user interface on the webpage, transmitting by the service process, in real time, an operation instruction to the software platform and further executing a corresponding operation by the software platform.

2. The remote deployment method according to claim 1, wherein,
the service process performs real-time communication with at least one software platform process; and
the service process respectively parses the configuration file of each user interface of the software platform, and based on information of each user interface in each configuration file, generates a webpage containing all interfaces locally at the server side.

3. The remote deployment method according to claim 2, wherein,
after the webpage is opened in the local browser of the server side, the service process creates a session module, and based on a login permission level configured for the session module, provides corresponding interaction and access permissions of the webpage, comprising:
creating users in the session module;
for each user, setting an interaction permission comprising a window visibility permission and a window invisibility permission; and,
for each user with the window visibility permission, setting an access permission comprising: an only-display permission and a full control permission.

4. The remote deployment method according to claim 1, wherein,
the user interfaces comprise at least one interactive control; and,
after the webpage is opened in the local browser of the server side, the service process is applicable to responding to an operation of the users on the at least one interactive control on the webpage.

5. The remote deployment method according to claim 1, wherein,
the user interfaces comprise at least one display control; and,
the service process performs real-time communication with the software platform process based on one or more of pipeline communication, shared memory communication, socket communication and message queue communication; and,
the software platform is TSMaster software platform, MATLAB software platform, and CANoe software platform; or,
the software platform is a third-party software platform supporting plugin system or secondary development.

6. A remote deployment system of user interfaces of a software platform, comprising a computer device, wherein the computer device comprises:
a software platform process;
a service process, configured to provide a HyperText Transfer Protocol (HTTP) service, and be applicable to performing real-time communication with the software platform process to obtain configuration files of the user interfaces of the software platform and runtime data of a software platform application, wherein the software platform is a third-party software platform;
wherein the service process is further applicable to parsing the configuration files of the user interfaces of the software platform and based on information of each user interface in the configuration files, generating a webpage containing a corresponding user interface locally at a server side; and,
after the webpage is opened in a local browser of the server side, the service process obtains an opening behavior to refresh, in real time, the runtime data of the software platform application on the webpage; and/or, in response to an operation on the user interface on the webpage, the service process transmits in real time an operation instruction to the software platform and further executes a corresponding operation by the software platform.

7. The remote deployment system according to claim 6, wherein,
the service process performs real-time communication with at least one software platform process; and
the service process respectively parses the configuration file of each user interface of the software platform, and based on information of each user interface in each configuration file, generates a webpage containing all interfaces locally at the server side.

8. The remote deployment system according to claim 7, wherein,
after the webpage is opened in the local browser of the server side, the service process creates a session module, and based on a login permission level configured for the session module, provides corresponding interaction and access permissions of the webpage, comprising:
creating users in the session module;
for each user, setting an interaction permission comprising a window visibility permission and a window invisibility permission; and,
for each user with the window visibility permission, setting an access permission comprising: an only-display permission and a full control permission.

9. The remote deployment system according to claim 6, wherein,
the user interfaces comprise at least one interactive control; and,
after the webpage is opened in the local browser of the server side, the service process is applicable to responding to an operation of the users on the at least one interactive control on the webpage.

10. The remote deployment system according to claim 6, wherein,
the user interfaces comprise at least one display control; and,
the service process performs real-time communication with the software platform process based on one or more of pipeline communication, shared memory communication, socket communication and message queue communication; and,
the software platform is TSMaster software platform, MATLAB software platform, and CANoe software platform.

11. A non-transitory computer-readable storage medium, storing computer-device readable instructions, wherein the computer-device readable instructions are executed by at least one processor to perform the remote deployment method of any of claims 1-5.

12. An electronic device, comprising at least one non-transitory computer-readable storage medium and at least one processor, wherein the at least one non-transitory computer-readable storage medium stores executable instructions, and the executable instructions are executed by the at least one processor to allow the at least one processor to perform the remote deployment method of any of claims 1-5.

13. A computer program product, comprising programs or instructions, wherein the programs or the instructions are executed on a computer to perform the remote deployment method of any of claims 1-5.

14. A remote deployment method of user interfaces of a Matrix Laboratory (MATLAB) software platform, comprising:
creating an independent service process at a server side, wherein the service process provides a HyperText Transfer Protocol (HTTP) service;
performing, by the service process, real-time communication with an MATLAB software platform process to obtain configuration files of the user interfaces of the MATLAB software platform and runtime data of a software platform application;
by the service process, parsing the configuration files of the user interfaces of the MATLAB software platform, and based on information of each user interface in the configuration files, generating a webpage containing a corresponding user interface locally at the server side; and
after the webpage is opened in a local browser of the server side, refreshing, by the service process in real time, runtime data of an MATLAB software platform application on the webpage; and/or, in response to an operation of a user on the user interface on the webpage, transmitting by the service process, in real time, an operation instruction to the MATLAB software platform and further executing a corresponding operation by the MATLAB software platform.

15. The remote deployment method according to claim 14, wherein,
the service process performs real-time communication with at least one MATLAB software platform process;
the service process respectively parses the configuration files of the user interfaces of the MATLAB software platform, and based on information of each user interface in corresponding configuration files, generates a webpage containing all interfaces locally at the server side; and,
after the webpage is opened in the local browser of the server side, the service process creates a session module, and based on a login permission level configured for the session module, provides corresponding interaction and access permissions of the webpage, comprising:
creating users in the session module; and
for each user, setting an interaction permission comprising a window visibility permission and a window invisibility permission; and, for each user with the window visibility permission, setting an access permission comprising: an only-display permission and a full control permission.
